# EUROPÄISCHE PATENTSCHRIFT

(11) **EP 2 376 806 B1**
(45) Veröffentlichungstag und Bekanntmachung des Hinweises auf die Patenterteilung: **05.12.2012**
(21) Anmeldenummer: 09774634.1
(22) Anmeldetag: 09.12.2009
(51) Int. Cl.: F16H 57/08, F16H 1/46, F16C 17/04, F16C 33/10, F16H 57/04, F16H 57/00

(54) **PLANETENGETRIEBE**
PLANETARY GEARBOX
BOITE DE VITESSE A TRAINS EPICYCLOIDAUX

(30) Priorität: 15.12.2008 DE 102008061903; 24.09.2009 DE 102009042591
(43) Veröffentlichungstag der Anmeldung: 19.10.2011
(73) Patentinhaber: SEW-EURODRIVE GmbH & Co. KG, 76646 Bruchsal (DE)
(72) Erfinder: GRIMM, Andreas, 76297 Stutensee (DE)
(86) Internationale Anmeldenummer: PCT/EP2009/008783
(87) Internationale Veröffentlichungsnummer: WO 2010/072331

(56) Entgegenhaltungen:
- DE-A1- 2 305 780
- DE-A1- 3 330 337
- DE-A1- 10 043 564
- DE-A1- 19 853 459
- DE-U1- 29 520 946
- FR-A- 660 902
- US-A- 4 237 750

## Beschreibung

Die Erfindung betrifft ein Planetengetriebe.

Aus der DE 23 05 780 ist ein mehrstufiges Planetengetriebe bekannt, bei dem die Planetenräder auf den Zapfen der Planetenträger und die einzelnen Stufen gegeneinander durch eine Gleitringanordnung gehalten sind.

Aus der DE 198 53 459 A1 ist ein mehrstufiges Planetengetriebe bekannt, bei welchem ein einziges Hohlrad mit einer einzigen Innenverzahnung vorgesehen ist, mit welchem alle Planentenräder kämmen.

Aus der DE 33 30 337 A1 ist eine Kraftdrehvorrichtung bekannt, welche ein Gehäuseteil aufweist, in dem sich ein ein- oder mehrstufiges Hauptgetriebe befindet. An der Eingangsseite des Gehäuseteils ist ein Gehäuseteil lösbar befestigt, das eine zusätzliche Getriebestufe enthält.

Aus der US 4,437,530 ist eine Achsenantriebsvorrichtung zum Antreiben von Fahrzeugrädervorichtungen bekannt, welche einen Differentialmechanismus zum Antreiben von Achswellen umfasst.

Die DE 295 20 946 U1 offenbart ein Planetengetriebe nach dem Oberbegriff des Anspruchs 1.

Der Erfindung liegt daher die Aufgabe zugrunde, ein Planetengetriebe weiterzubilden.

Erfindungsgemäß wird die Aufgabe bei der nach den in Anspruch 1 angegebenen Merkmalen gelöst.

Wichtige Merkmale der Erfindung bei dem Planetengetriebe sind, dass das Planetengetriebe mindestens zwei Sonnenrädern umfasst, welche koaxial hintereinander angeordnet sind, wobei zwischen den Sonnenrädern ein hydrodynamisches Axiallager ausgebildet ist. Von Vorteil ist dabei, dass axiale Kräfte, welche auf die Sonnenräder einwirken können, wie zum Beispiel die Gewichtskraft der Sonnenräder selbst, aufgenommen werden und ein Verschleiß verringert ist.

Erfindungsgemäß ist das hydrodynamische Axiallager zwischen zwei sich gegenüberliegenden Stirnflächen der Sonnenräder ausgebildet. Von Vorteil ist dabei, dass keine zusätzlichen Bauteile erforderlich sind.

Erfindungsgemäß weist zur Ausbildung des hydrodynamischen Axiallagers ein erstes der Sonnenräder in seiner Stirnfläche eine erste Ausnehmung auf, welche in Umfangsrichtung teilwiese radial weiter ausgedehnt ist als die Stirnfläche eines zweiten der Sonnenräder. Von Vorteil ist dabei, dass die Abschnitte der Stirnflächen, welche das hydrodynamische Axiallager bilden, gut mit Schmierstoff versorgt sind.

Bei einer vorteilhaften Ausgestaltung liegt die erste Ausnehmung konzentrisch zur Achse des ersten Sonnenrades und ist vorzugsweise ovalförmig ausgebildet. Von Vorteil ist dabei, dass die erste Ausnehmung einfach zu fertigen ist und das hydrodynamische Axiallager gleichmäßig symmetrisch mit Schmierstoff versorgt ist beziehungsweise ausgebildet wird.

Bei einer weiteren vorteilhaften Ausgestaltung wird die Stirnfläche des zweiten Sonnenrades von einem zentral angeordneten Zapfen überragt, welcher zumindest teilweise in einer weiteren Ausnehmung der Stirnfläche des ersten Sonnenrades liegt. Von Vorteil ist dabei, dass die Fertigung des zweiten Sonnenrades vereinfacht ist, da der Zapfen auch als Halterung für ein Werkzeug bei der Herstellung benutzbar ist. Gleichzeitig werden Staustufen für das hydrodynamische Axiallager gebildet, welche eine gute Schmierstoffversorgung und den Verbleib des Schmierstoffes zwischen den Bereichen der Stirnflächen, welche das hydrodynamische Axiallager bilden, gewährleisten.

Bei einer weiteren vorteilhaften Ausgestaltung ist die weitere Ausnehmung konzentrisch zur Achse des ersten Sonnenrades und kreisförmig ausgeführt, wobei die weitere Ausnehmung axial tiefer in das erste Sonnenrad hineinragt als die erste Ausnehmung. Von Vorteil ist dabei, dass die weitere Ausnehmung für die Aufnahme des Zapfens geeignet ist. Gleichzeitig ist die weitere Ausnehmung als Schmierstoffreservoir für das hydrodynamische Axiallager geeignet.

Bei einer weiteren vorteilhaften Ausgestaltung berührt ein Ölniveau eines Öls, mit welchem das Planetengetriebe zumindest teilweise gefüllt ist zumindest die erste Ausnehmung oder steht die erste Ausnehmung zumindest im Schmiermittel, insbesondere Öl. Von Vorteil dabei ist, dass das hydrodynamische Axiallager sicher aus einer Ruheposition des Planetengetriebes heraus gebildet ist.

Bei einer weiteren vorteilhaften Ausgestaltung sind in die Stirnflächen der Sonnenräder Zentrierbohrungen und/oder Werkzeugaufnahmen eingebracht. Von Vorteil dabei ist, das die Sonnenräder bei der Fertigung einfach zu handhaben sind. Weiter dienen die Zentrierbohrungen als Schmiermittelreservoir für das hydrodynamische Axiallager.

Bei einer weiteren vorteilhaften Ausgestaltung ist ein Abstand zwischen einer Frontfläche des Zapfens und einer Bodenfläche der weiteren Ausnehmung größer als der Abstand zwischen den sich gegenüberliegenden Stirnflächen. Von Vorteil dabei ist, dass das hydrodynamische Axiallager wohldefiniert ist, d.h. in seiner Lage/Postion nicht überbestimmt ist und ein Schmiermittelreservoir, insbesondere Ölreservoir für das hydrodynamische Axiallager gebildet ist.

Bei einer weiteren vorteilhaften Ausgestaltung sind die Sonnenräder axial schwimmend gelagert. Von Vorteil dabei ist, dass die Sonnenräder einfach montierbar sind und das hydrodynamische Axiallager je nach einem Drehzahlunterschied der Sonnenräder unterschiedlich ausgebildet ist.

Bei einer weiteren vorteilhaften Ausgestaltung ist ein eintriebsseitiger Endbereich eines der Sonnenräder, insbesondere das zweite Sonnenrad, drehfest, vorzugsweise formschlüssig, mit einem korrespondierenden Endbereich einer Eintriebswelle oder eines Planetenträgers einer vorstehenden Planetenstufe verbunden. Von Vorteil dabei ist, dass ein Drehmoment sicher übertragbar ist und axiale Kräfte auf die Eintriebswelle oder den Planetenträger eine vorstehenden Planetenstufe durch das hydrodynamische Axiallager abgefangen sind.

Bei einer weiteren vorteilhaften Ausgestaltung weist das Planetengetriebe eine erste und eine zweite Stufe auf, wobei ein erstes Sonnenrad mit einem Endbereich als Mitnehmer in einen Planetenträger der ersten Stufe eingreift, wobei das erste Sonnenrad eine in axialer Richtung durchgehende Verzahnung aufweist. Von Vorteil ist dabei, dass das Planetengetriebe einfach herstellbar ist.

Bei einer weiteren vorteilhaften Ausgestaltung weist das erste Sonnenrad einen mittleren Bereich auf, wo die durchgehend gefertigte Verzahnung unterbrochen ist. Von Vorteil ist dabei, dass ein zweiwangiger Planetenträger mit größerer Festigkeit herstellbar ist.

Bei einer weiteren vorteilhaften Ausgestaltung weist der Endbereich in einem Teilbereich einen verkürzten Kopfkreis auf, wodurch ein axialer Anschlag entsteht. Von Vorteil ist dabei, dass das erste Sonnenrad axial wohldefiniert bezüglich des Planetenträgers der ersten Stufe angeordnet ist. Axialkräfte sind zumindest in einer Richtung auf das erste Sonnenrad übertragbar.

Bei einer weiteren vorteilhaften Ausgestaltung ist die zweite Stufe als Abtriebstufe ausgebildet, wobei ein zweiwangiger Planetenträger der Abtriebsstufe an der Abtriebsseite als Hohlwelle, welche vorzugsweise eine Schrumpfscheibe umschließt, oder als Vollwelle, insbesondere als Vierkantvollwelle, ausgebildet ist. Von Vorteil ist dabei, dass ein Drehmoment sicher übertragbar ist.

Bei einer weiteren vorteilhaften Ausgestaltung ist ein Zwischenflansch an den ein erstes Hohlrad für die erste Stufe und ein zweites Hohlrad für die zweite Stufe angeflanscht sind, als Gussteil ausgeführt. Von Vorteil ist dabei, dass der Zwischenflansch stabil und günstig herstellbar ist.

Bei einer weiteren vorteilhaften Ausgestaltung ist von der Eintriebsseite her gesehen vor der ersten Stufe eine Eintriebsstufe angeordnet. Von Vorteil ist dabei, dass mit der Eintriebsstufe, als Nullte Stufe des Planetengetriebes, ein größerer Übersetzungsbereich variabel realisierbar ist.

Bei einer weiteren vorteilhaften Ausgestaltung greift das zweite Sonnenrad als Sonnenrad der ersten Stufe in einem eintriebsseitigen Endbereich mit einer Vielkeilverzahnung in einen Planetenträger der Eintriebsstufe ein. Von Vorteil ist dabei, dass das Drehmoment sicher von der Eintriebsstufe in die erste Stufe übertragbar ist.

Bei einer weiteren vorteilhaften Ausgestaltung weisen die Eintriebsstufe und die erste Stufe je drei Planetenräder auf. Von Vorteil ist dabei, dass ein Drehmoment sicher übertragbar ist.

Bei einer weiteren vorteilhaften Ausgestaltung weist die zweite Stufe vier Planetenräder auf. Von Vorteil ist dabei, dass ein größeres Drehmoment übertragbar ist oder der Verschleiß verringert ist.

Bei einer weiteren vorteilhaften Ausgestaltung weist ein Eintriebsdeckel einen zentralen zylindermantelförmigen Lagerträger und ein den Lagerträger umschließendes kreisförmiges Schildteil auf, wobei das Schildteil von radial vom Lagerträger abstehende dreieckförmige Teilen verstärkt ist und die dreieckförmigen Teile sich auf dem Lagerträger abstützen. Von Vorteil ist dabei, dass radiale Kräfte sicher ableitbar sind.

Bei einer weiteren vorteilhaften Ausgestaltung ist ein gleichschenkelig dreieckförmiger Eintriebsplanetenträger mit Planetenbolzen zur Lagerung der Eintriebsplanetenräder der Eintriebsstufe als Gussteil gefertigt, wobei die Planetenbolzen in unterschiedlichen radialen Abständen zu einer zentralen Achse des Planetengetriebes aus dem Gussteil herstellbar sind. Von Vorteil ist dabei, dass unterschiedliche Übersetzungen einfach realisierbar sind.

Bei einer weiteren vorteilhaften Ausgestaltung sind die Planetenträger der ersten und zweiten Stufe aus einem Stück gegossen, wobei Aufnahmelöcher für die Bolzen bzw. weiteren Bolzen für die Planetenräder in unterschiedlichen radialen Abständen zu einer zentralen Achse des Planetengetriebes herstellbar sind. Von Vorteil ist dabei, dass unterschiedliche Übersetzungen einfach realisierbar sind.

Bei einer weiteren vorteilhaften Ausgestaltung umfasst ein Gehäuse des Planetengetriebes einen eintriebseitigen Deckel, ein Eintriebshohlrad, einen Eintriebsflansch, ein erstes Hohlrad, einen Zwischenflansch, ein zweites Hohlrad und einen Abtriebsdeckel, wobei der Eintriebsflansch, der Zwischenflansch und der Abtriebsdeckel aus je einem Gussteil oder Schmiedeteil gefertigt sind. Von Vorteil ist dabei, dass das Gehäuse des Planetengetriebes einfach und kostengünstig fertigbar ist.

Weitere Vorteile ergeben sich aus den Unteransprüchen.

### Bezugszeichenliste

- 10: Planetengetriebe
- 11: erstes Hohlrad
- 12: zweites Hohlrad
- 13: Zwischenflansch
- 14: Bohrung in Stirnwand
- 15: Schraube
- 16: Eintriebshohlrad
- 17: Eintriebsdeckel
- 18: Abtriebsdeckel
- 19: weitere Schraube
- 20: erste Stufe
- 22: zweite Sonnenrad
- 23: Zapfen
- 24: Bolzen
- 26: Planetenträger der ersten Stufe
- 27: Planetenrad
- 28: Planetenradlager
- 30: zweite Stufe
- 32: erste Sonnenrad
- 33: Sonnenradlager
- 34: Endbereich
- 35: Teilbereich
- 36: mittlerer Bereich
- 37: erste Ausnehmung
- 38: axialer Anschlag
- 39: weitere Ausnehmung
- 40: zweiwangiger Planetenträger
- 41: weitere Planetenrad
- 42: Hohlwelle
- 43: Planetenträgerlager
- 44: Schrumpfscheibe
- 45: Abtriebslager
- 46: Vollwelle
- 47: Bolzenlager
- 49: weiterer Bolzen
- 70: Wellendichtring
- 71: Laufring
- 72: Entlüftung
- 73: Blechteil
- 74: Verschlussschraube
- 80: Eintriebsstufe
- 81: Eintriebsflansch
- 82: Eintriebswelle
- 84: Eintriebswellenlager
- 86: Verschlussdeckel
- 90: Eintriebsplanetenträger
- 91: Eintriebssonnenrad
- 92: Eintriebsplanetenrad
- 94: Planetenlager
- 96: Planetenbolzen

Die Erfindung wird nun anhand von Ausführungsbeispielen mit Bezugnahme auf die Zeichnung näher erläutert. Es zeigen rein schematisch:
- Fig. 1: eine Explosionsdarstellung eines erfindungsgemäßen Planetengetriebes;
- Fig. 2: eine Frontansicht und eine Seitenansicht der in Figur 1 gezeigten Ausführungsform;
- Fig. 3: eine Frontansicht und eine Seitenansicht einer weiteren Ausführungsform;
- Fig. 4: eine Explosionsdarstellung einer anderen Ausführungsform;
- Fig. 5: eine Frontansicht und eine Seitenansicht der in Figur 4 gezeigten Ausführungsform;
- Fig. 6: eine Frontansicht und eine Seitenansicht einer abgewandelten Ausführungsform;
- Fig. 7: als Detail zwei Sonnenräder des erfindungsgemäßen Planetengetriebes in Explosionsdarstelllung; und
- Fig. 8: eine Schnittdarstellung der in Figur 7 gezeigten Sonnenräder;

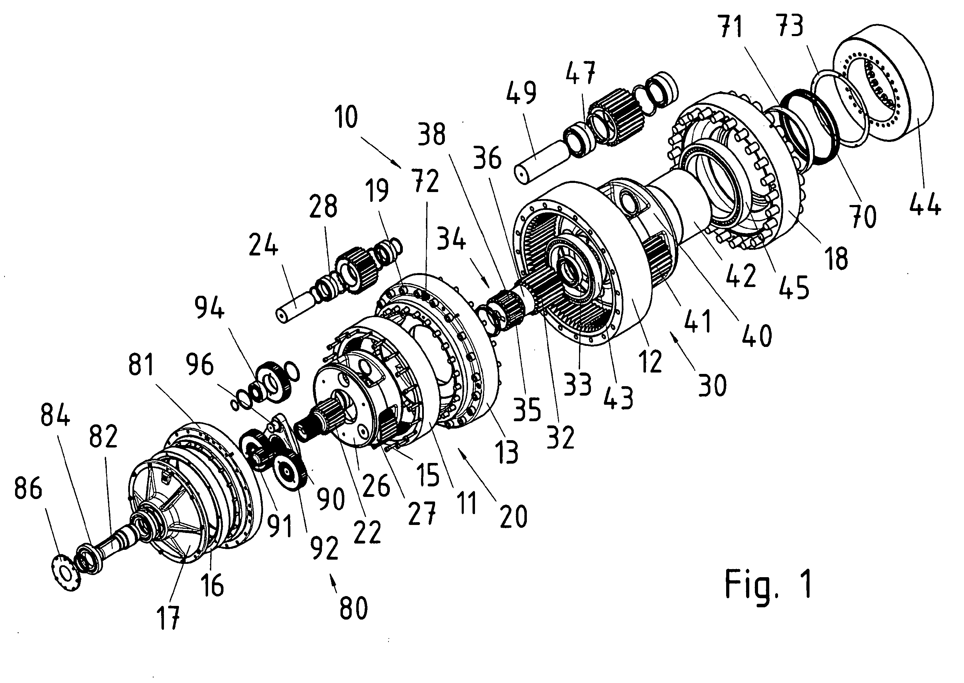

Figur 1 zeigt ein erfindungsgemäßes Planetengetriebe 10 in Explosionsdarstellung. Das Planetengetriebe 10 umfasst drei Stufen: eine nullte Stufe als Eintriebsstufe 80, eine erste Stufe 20, welche bei nicht vorhanden sein der nullten Stufe als alternative Eintriebsstufe fungiert und eine zweite Stufe 30 als Abtriebsstufe.

Ein Gehäuse des Planetengetriebes 10 umfasst einen eintriebseitigen Deckel 17, an welche ein Eintriebshohlrad 16 befestigt ist. Abtriebsseitig ist an dem Eintriebshohlrad 16 ein Eintriebsflansch 81 angeschraubt. An den Eintriebsflansch schließt sich abtriebsseitig ein erstes Hohlrad 11 an, welches mittels einer Schraube 15 an einem Zwischenflansch 13 befestigt ist. Der Zwischenflansch 13 bildet die Verbindung von einem zweiten Hohlrad 12 mit dem ersten Hohlrad 11.

Das zweite Hohlrad 12 ist mittels einer weiteren Schraube 19 mit dem Zwischenflansch 13 verschraubt. An das zweite Hohlrad 12 ist abtriebsseitig ein Abtriebsdeckel 18 angeschlossen, welcher das Gehäuse des Planetengetriebes 10 abtriebsseitig abschließt. Am Gehäuse sind eine Entlüftung 72 und eine Verschlussschraube 74 angeordnet. Die Entlüftung dient zum Druckausgleich bei einer Erwärmung eines Inneren des Planetengetriebes 10. Die durch die Verschlussschraube 74 verschlossen Öffnung im Gehäuse des Planetengetriebes 10 dient zum Einfüllen, bzw. Auswechseln eines Schmiermittels, vorzugsweise Öls, des Planetengetriebes 10.

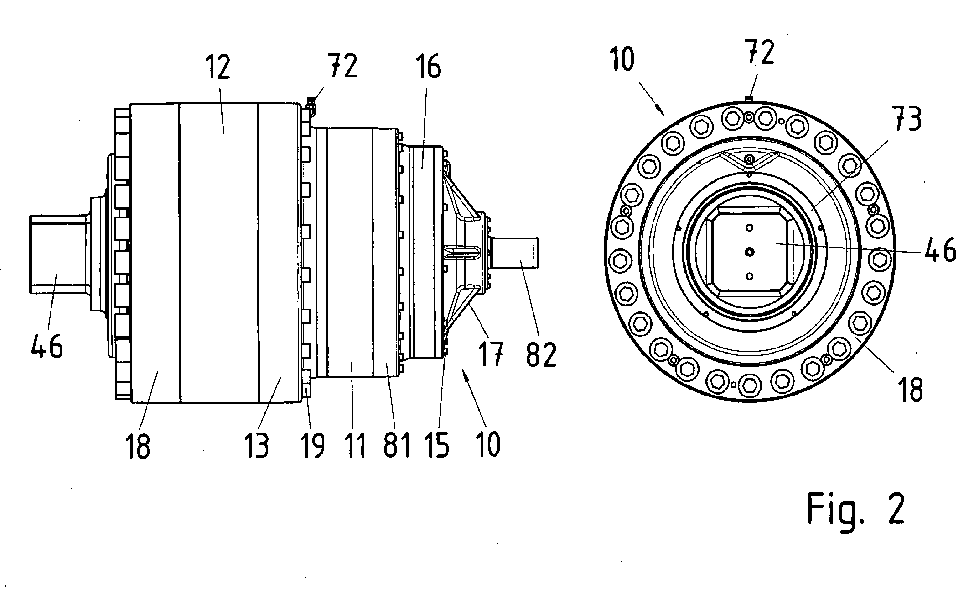

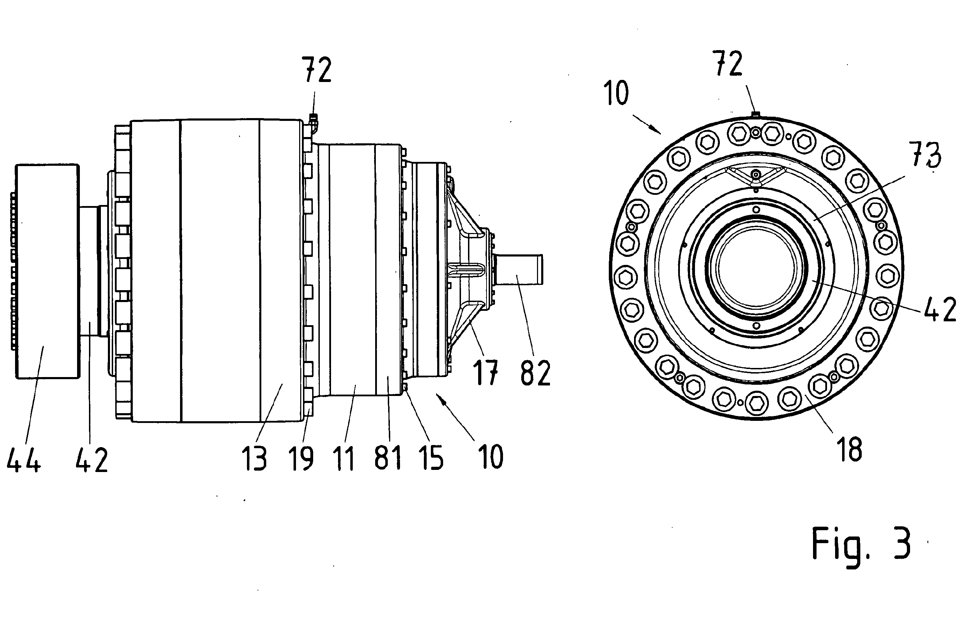

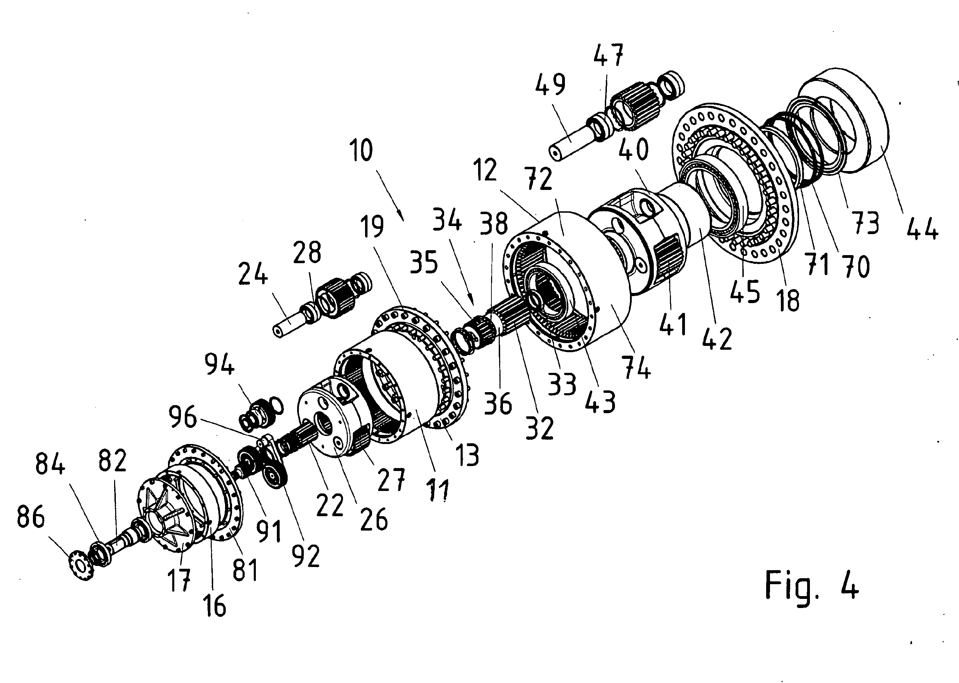

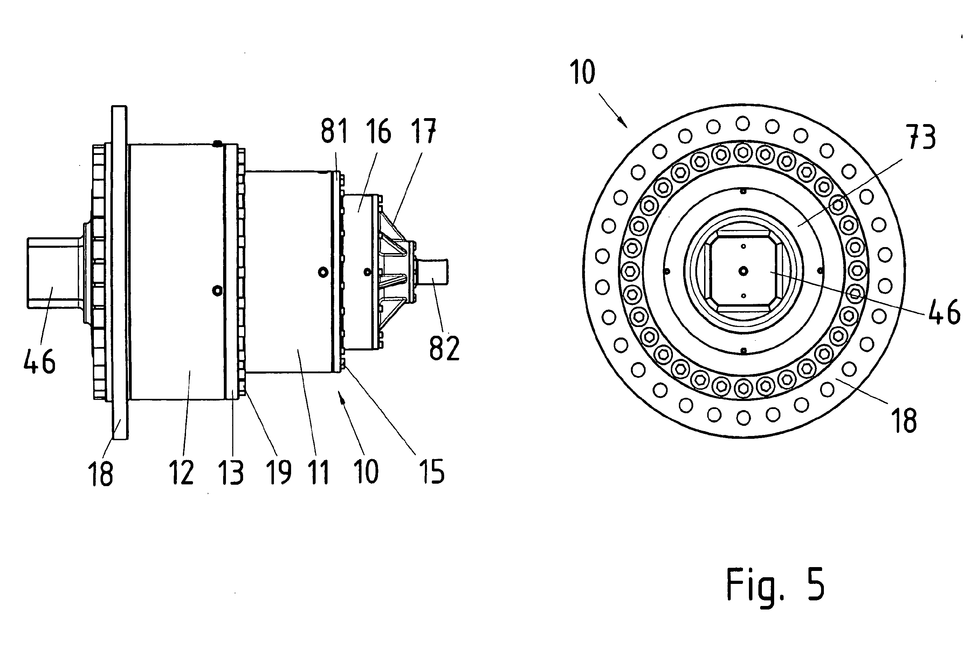

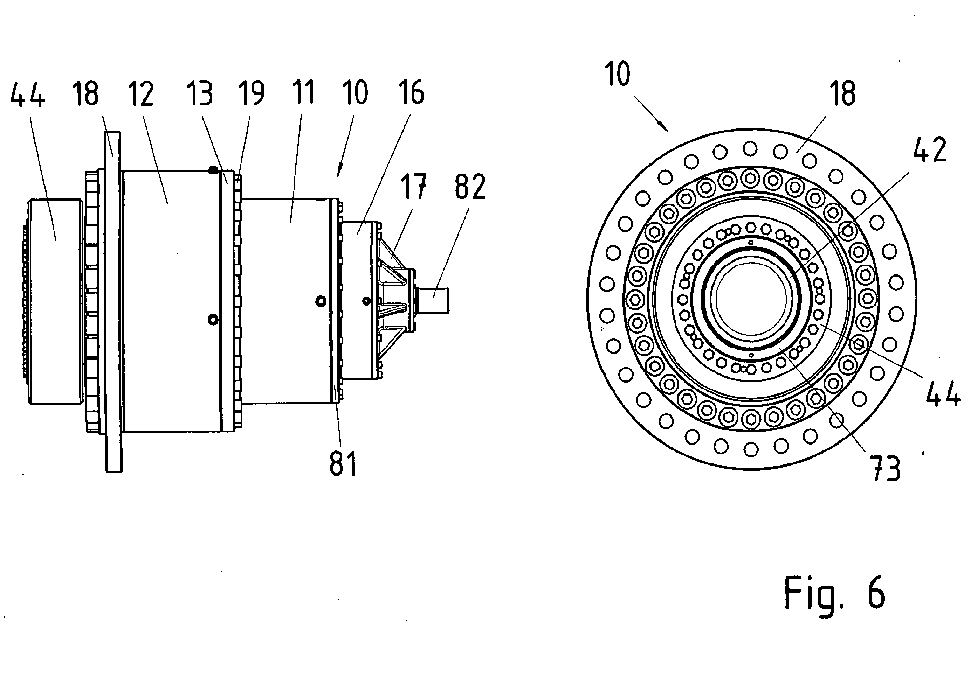

Bei dem in Figur 1, Figur 2 und Figur 3 gezeigten Ausführungsbeispielen sind der Eintriebsflansch 81, der Zwischenflansch 13 und der Abtriebsdeckel 18 vorzugsweise aus Gussteilen gefertigt. Bei den in Figur 4, Figur 5, und Figur 6 gezeigten Ausführungsbeispielen sind der Eintriebsflansch 81, der Zwischenflansch 13 und der Abtriebsdeckel 18 vorzugsweise als Schmiedeteil ausgeführt.

Eine Eintriebswelle 82 ragt durch den Eintriebsdeckel 17 hindurch. Ein abtriebsseitiger Endbereich ist hohl ausgeführt. Der Eintriebsdeckel 17 weist einen zentralen zylindermantelformigen Lagerträger und ein den Lagerträger umschließendes kreisförmiges Schildteil auf. Das Schildteil ist über radial vom Lagerträger abstehende dreieckförmige Teile verstärkt. Die dreieckformigen Teile stützen sich auf dem Lagerträger ab. Die Eintriebswelle 82 ist durch ein Eintnebswellenlager 84 im Lagerträger des Eintriebsdeckels 17 gelagert. Eintriebsseitig ist das Eintriebswellenlager durch einen Verschlussdeckel 86 abgedeckt. Der Verschlussdeckel 86 weist eine Dichtung zur Eintriebswelle 82 hin auf.

Im Eintriebshohlrad 16 ist die Eintriebsstufe 80 des Planetengetriebes 10 angeordnet. Ein Eintriebssonnenrad 91 greift mit einem eintriebsseitigen Teilbereich, welcher eine Vielkeilverzahnung aufweist, in eine entsprechende Ausnehmung in der Eintriebswelle 82 ein. Das Eintriebssonnenrad 91 kämmt mit einem Verzahnungsbereich mit drei Eintriebsplanetenrädern 92. Die Eintriebsplanetenräder 92 sind mit einem Planetenlager 94 auf Planetenbolzen 96 eines Eintriebsplanetenträgers 90 gelagert und stehen mit einer Verzahnung des Eintriebshohlrads 16 in Eingriff. Der Eintriebsplanetenträger 90 ist als annähernd gleichschenkliges Dreieck mit einer zentralen kreisförmigen Ausnehmung ausgeführt. Der Planetenbolzen 96 wird direkt aus dem Gussteil geformt. Ein Rohgussteil zur Herstellung des Eintriebsplanetenträgers 90 weist axial abstehende Rohbolzen auf, welche aus axialer Blickrichtung eine in radialer Richtung ovalförmig verlängert Grundfläche zeigen. So lassen sich die Planetenbolzen 96 aus den Rohbolzen in verschiedenen radialen Abständen zu einer zentralen Achse des Planetengetriebes 10 ausbilden.

An die Eintriebsstufe 80 schließt sich die erste Stufe 20 des Planetengetriebes 10 an. Ein zweites Sonnenrad 22 der ersten Stufe ragt mit einem als Vielkeilverzahnung ausgeführten

Endbereich in die kreisförmige Ausnehmung des Eintriebsplanetenträgers 90 hinein. Die kreisförmige Ausnehmung weist eine korrespondierende Vielkeilverzahnung auf. Ein Verzahnungsbereich des zweiten Sonnenrades 22 kämmt mit einem Planetenrad 27. Das Planetenrad 27 ist auf Bolzen 24 eines Planetenträgers 26 der ersten Stufe 20 mittels eines Planetenradlagers 28 gelagert und steht mit einer Verzahnung des ersten Hohlrads 11 in Eingriff. Das Planetenradlager 28 wird durch entsprechende Sicherungsringe axial fixiert. Die Bolzen 24 sind in entsprechenden Öffnungen in Wangen des vorzugsweise zweiwangig ausgeführten Planetenträgers 26 angeordnet. Die erste Stufe 20 weist vorzugsweise drei Planetenräder 27 auf.

Abtriebsseitig ist im zentralen zylindermantelförmigen Gehäuseteil 12 eine zweite Stufe 30 angeordnet. Ein erstes Sonnenrad 32 weist eine im Prinzip durchgehend gefertigte Verzahnung auf. Die durchgehend gefertigte Verzahnung des ersten Sonnenrads 32 ist in einem mittleren Bereich 36 des ersten Sonnenrads 32 durch einen Freistich unterbrochen. Unterbrochen bedeutet in diesem Zusammenhang, dass gar keine Verzahnung mehr vorhanden ist, das heißt, dass das erste Sonnenrad 32 in diesem mittleren Bereich 36 eine im Rahmen der Fertigungsgenauigkeit glatte Oberfläche aufweist, wobei ein Durchmesser des ersten Sonnenrads 32 in diesem mittleren Bereich 36 höchstens dem Fußkreisdurchmesser der angrenzenden Verzahnung entspricht. Bei der Fertigung ist das erste Sonnenrad 32 eingespannt und die Verzahnungsmaschine führt das spanabtragende Werkzeug mit einer ununterbrochenen Hubbewegung über die gesamte axiale Länge des ersten Sonnenrads 32. Durch den Freistich muss weniger Material abgetragen werden.

Ein eintriebsseitiger Endbereich 34 des ersten Sonnenrads 32 weist in einem Teilbereich 35 verkürzte Zähne auf, welche somit einen verkleinerten Kopfkreisdurchmesser bilden. Mit diesem Teilbereich 35 greift das erste Sonnenrad 32 in den Planetenträger 26 der ersten Stufe ein. Der Planetenträger 26 der ersten Stufe 20 weist dafür eine korrespondierende Verzahnung in einer kreisförmigen Öffnung in der abtriebsseitigen Wange auf. Die Zentrierung erfolgt über die Zahnflanken. Als Passung ist eine Spielpassung, Übergangspassung oder Presspassung möglich. Für besonders spielarme Ausführungen ist auch ein spanabtragendes Fügen möglich. Durch den verkürzten Kopfkreis im Teilbereich 35 entsteht ein axialer Anschlag 38 an dem der Planetenträger 26 mit einer abtriebsseitigen Stirnfläche ansteht.

Das erste Sonnenrad 32 ist mit einem abtriebsseitigen Endabschnitt durch ein Sonnenradlager 33, welches vorzugsweise als Rillenkugellager ausgeführt ist, in einem zweiwangigen Planetenträger 40 der zweiten Stufe 30 gelagert. Im zweiwangigen Planetenträger 40 ist ein weiteres Planetenrad 41 mittels eines Bolzenlagers 47 auf einem weiteren Bolzen 49 gelagert. Der weitere Bolzen 49 ist in Ausnehmungen in Wangen des zweiwangigen Planetenträgers 40 gehalten. Vorzugsweise sind als Bolzenlager 47 zwischen dem weiteren Bolzen 49 und dem weiteren Planetenrad 41 zwei Doppelzylinderrollenlager vorgesehen. Das weitere Planetenrad 41 kämmt mit dem ersten Sonnenrad 32. Nur in dem Bereich, wo das erste Sonnenrad 32 mit dem weiteren Planetenrad 41 kämmt, ist die Verzahnung des Sonnenrades 32 geschliffen. Durch den Freistich zwischen dem ungeschliffenen eintriebsseitigen Bereich 34 und dem geschliffenen Bereich lässt sich das Schleifwerkzeug bei der Fertigung leichter vom ersten Sonnenrad 32 wegführen bzw. hinführen.

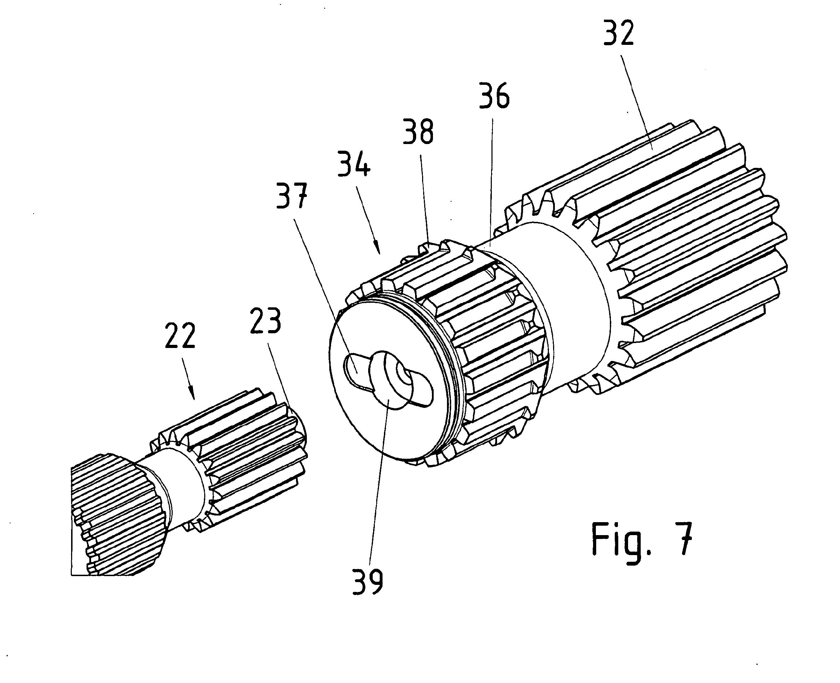

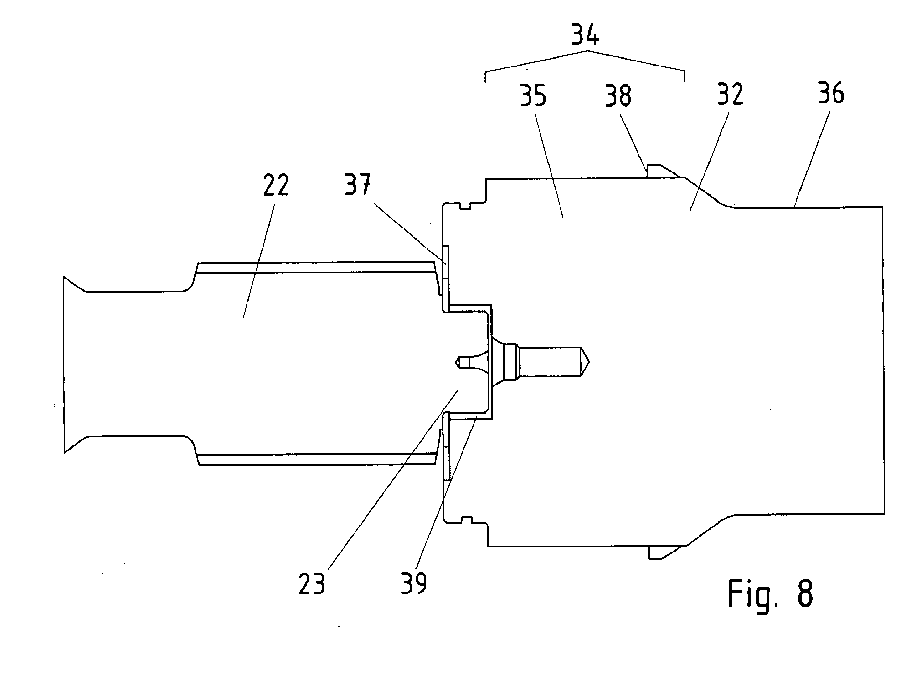

Die Figuren 7 und 8 zeigen Details des ersten Sonnenrads 32 und des zweiten Sonnenrads 22. Das erste Sonnenrad 32 und das zweite Sonnenrad 22 sind koaxial hintereinander angeordnet. Zwischen den sich gegenüberliegenden Stirnflächen ist auf Grund der unterschiedlichen Drehzahlen während des Betriebs des Planetengetriebes ein hydrodynamisches Axiallager ausgebildet.

In die Stirnfläche des ersten Sonnenrads 32 ist eine erste Ausnehmung 37 eingebracht, insbesondere eingefräst. Wie aus Figur 8 ersichtlich ragt die erste Ausnehmung 37 über die Stirnfläche des zweiten Sonnenrades 22 hinaus. Das heißt die radialen Außenbereiche der ersten Ausnehmung 37 sind bei einem Blick aus axialer Richtung von dem zweiten Sonnenrad 22 aus gesehen, zu erkennen. Dadurch kann ein Schmiermittel, vorzugsweise ein Schmieröl bzw. Öl, mit welchem das Planetengetriebe 10 zumindest teilweise befüllt ist, in die erste Ausnehmung 37 eindringen.

Das eindringende Schmiermittel wird auf Grund der unterschiedlichen Drehzahlen des ersten Sonnenrads 32 und des zweiten Sonnenrads 22 des Planetengetriebes 10 während des Betriebs des Planetengetriebes 10 zwischen die sich gegenüberliegenden Stirnflächen des ersten Sonnenrads 32 und des zweiten Sonnenrads 22 gezogen und bildet dort einen Schmierfilm aus. Dabei entsteht ein Druck in axialer Richtung, welcher das hydrodynamische Axiallager ausbildet.

Zur Sicherung der Ausbildung eines Schmierfilms zwischen den sich gegenüberliegenden Stirnflächen der beiden Sonnenräder, d.h. des ersten Sonnenrads 32 und des zweiten Sonnenrads 22, liegt ein Schmiermittelniveau zumindest in dem Niveau der radialen Ausdehnung der ersten Ausnehmung 37. So ist sichergestellt, dass bei einem Anlaufen des Planetengetriebes 10 das Schmiermittel zwischen die Stirnflächen auf Grund der unterschiedlichen Drehzahl des ersten und zweiten Sonnenrads 32,22 befördert wird.

Die erste Ausnehmung 37 ist vorzugsweise konzentrisch zur Achse des ersten Sonnenrades 32 angeordnet und ovalförmig ausgebildet ist. So wird ein symmetrischer Schmierfilm ausgebildet, und das hydrodynamische Axiallager vorteilhafter ausgebildet.

Die Stirnfläche des ersten Sonnenrads 32 weist eine weitere Ausnehmung 39 auf, welche konzentrisch zur Achse des ersten Sonnenrades 32 und kreisförmig ausgeführt ist. Die weitere Ausnehmung 39 ragt tiefer in das erste Sonnenrad 32 hinein als die erste Ausnehmung 37. Die weitere Ausnehmung 39 überragt in zwei gegenüberliegenden Teilbereichen symmetrisch die erste Ausnehmung 37. In einen Boden der weiteren Ausnehmung 39 ist eine Sacklochbohrung eingebracht, welche zur Befestigung und/oder Zentrierung des ersten Sonnenrads 32 in einem Werkzeug dient.

In die weitere Ausnehmung 39 ragt zumindest teilweise ein Zapfen 23 der Stirnfläche des zweiten Sonnenrads 22 hinein. Der Zapfen 23 steht konzentrisch, zentral aus der Stirnfläche des zweiten Sonnenrads 22 hervor. Der Zapfen 23 dient zur Befestigung des zweiten Sonnenrads 22 in einem Werkzeug. Das Abstechen dieses Zapfens 23 ist aufwendiger, als das Bearbeiten der Stirnfläche des ersten Sonnenrads 32 mit einer weiteren Ausnehmung 39. Zusätzlich unterstütz der Zapfen 23 die Ausbildung des hydrodynamischen Axiallagers als Staustufe für das Schmiermittel.

In die sich gegenüberliegenden Stirnflächen ist jeweils eine Zentrierbohrung eingebracht. Diese dient als Zentrierung und/oder als eine Anbringhilfe für ein Werkzeug bei der Fertigung der Sonnenräder 22, 32. Gleichzeitig erweitern diese Zentrierbohrungen ein Schmiermittelreservoir für das hydrodynamische Axiallager.

Eintriebsseitig ist der zweiwangige Planetenträger 40 von einem Planetenträgerlager 43 im Zwischenflansch 13 gelagert. Abtriebsseitig ist der Planetenträger 40 entweder als Hohlwelle 42 oder als Vollwelle 46 ausgeformt. Die Vollwelle 46 oder Hohlwelle 42 schaut mit einem weiteren Endabschnitt aus dem Abtriebsdeckel 18 hervor und ist über ein Abtriebslager 45 im Abtriebsdeckel 18 gelagert. Zwischen Vollwelle 46 oder Hohlwelle 42 und dem Abtriebsdeckel 18 ist zur Abdichtung ein Wellendichtring 70 angeordnet, vorzugsweise als doppelter Wellendichtring. Der Wellendichtring 70 läuft auf einem an der Hohlwelle 42 angeordneten Läuferring 71. Abtriebsseitig ist der Wellendichtring 70 durch eine Blechteil 73 abgedeckt bzw. geschützt. Zur Befestigung einer anzutreibenden Vorrichtung umgibt eine Schrumpfscheibe 44 zumindest teilweise den weiteren Endabschnitt der Hohlwelle 42.

Zur Vermeidung von Verletzung ist bei einer nichtgezeigten Ausführungsform eine zylindermantelförmige Abdeckung am Abtriebsdeckel 18 befestigbar. Die zylindermantelförmige Abdeckung ist vorzugsweise, insbesondere ausschließlich, aus Biegeteilen hergestellt, welche miteinander verschraubt sind.

Bei einer weitern nicht gezeigten Ausführungsform ist an den Abtriebsdeckel 18 ein L-förmiger Fuß angeschraubt. Der L-förmige Fuß weist einen annähernd ringförmigen Teilabschnitt und einen viereckigen Rahmen als Standfläche bzw. Befestigungsfläche auf. Der ringförmige Teilabschnitt umfasst Ausstülpungen an denen der viereckige Rahmen befestigt ist. Zusätzlich sind der annähernd ringförmiger Teilabschnitt und der viereckige Rahmen über einen Winkel miteinander verbunden. Ein Endbereich des Winkels ragt durch ein viereckiges Langloch einer Ausstülpung am annähernd ringförmigen Teilabschnitt hindurch. Beide Teile sind vorzugsweise miteinander verschweißt. Dies erleichtert die Montage des L-förmigen Fußes.

## Patentansprüche

1. Planetengetriebe(10), insbesondere mehrstufiges Planetengetriebe,
mit mindestens zwei Sonnenrädern (22, 32), welche koaxial hintereinander angeordnet sind,
wobei zwischen den Sonnenrädern (22, 32) ein hydrodynamisches Axiallager ausgebildet ist, wobei das hydrodynamische Axiallager zwischen zwei sich gegenüberliegenden Stirnflächen der Sonnenräder (22, 32) ausgebildet ist, **dadurch gekennzeichnet,**
**dass** zur Ausbildung des hydrodynamischen Axiallagers
ein erstes Sonnenrad (32) der Sonnenräder (22, 32) in seiner Stirnfläche eine erste Ausnehmung (37) aufweist, welche in Umfangsrichtung teilweise radial weiter **ausgedehnt ist als die Stirnfläche eines zweiten Sonnenrads (22) der Sonnenräder (22, 32).**

2. Planetengetriebe (10) nach Anspruch 1
**dadurch gekennzeichnet, dass**
die erste Ausnehmung (37) konzentrisch zur Achse des ersten Sonnenrades (32) liegt und ovalförmig ausgebildet ist.

3. Planetengetriebe (10) nach Anspruch 1 oder 2
**dadurch gekennzeichnet, dass**
die Stirnfläche des zweiten Sonnenrades (22) von einem zentral angeordneten Zapfen (23) überragt ist, welcher zumindest teilweise in einer weiteren Ausnehmung (39) der Stirnfläche des ersten Sonnenrades (32) liegt.

4. Planetengetriebe (10) nach Anspruch 3
**dadurch gekennzeichnet, dass**
die weitere Ausnehmung (39) konzentrisch zur Achse des ersten Sonnenrades (32) und kreisförmig ausgeführt ist,
wobei die weitere Ausnehmung (39) axial tiefer in das erste Sonnenrad (32) hineinragt als die erste Ausnehmung (37).

5. Planetengetriebe (10) nach einem der Ansprüche 3 bis 4
**dadurch gekennzeichnet, dass**
ein Schmiermittelniveau eines Schmiermittels, mit welchem das Planetengetriebe (10) zumindest teilweise gefüllt ist zumindest die erste Ausnehmung berührt oder die erste Ausnehmung im Schmiermittel steht.

6. Planetengetriebe (10) nach einem der vorherigen Ansprüche
**dadurch gekennzeichnet, dass**
in die Stirnflächen der Sonnenräder (22, 32) Zentrierbohrungen und/oder Werkzeugaufnahmen eingebracht sind.

7. Planetengetriebe (10) nach Anspruch 3,
**dadurch gekennzeichnet, dass**
ein Abstand zwischen einer Frontfläche des Zapfens (23) und einer Bodenfläche der weiteren Ausnehmung (39) größer ist als der Abstand zwischen den sich gegenübediegenden Stirnflächen.

8. Planetengetriebe nach einem der vorherigen Ansprüche
**dadurch gekennzeichnet, dass**
die Sonnenräder (22, 32) axial schwimmend gelagert sind.

9. Planetengetriebe nach einem der vorherigen Ansprüche
**dadurch gekennzeichnet, dass**
ein eintriebsseitiger Endbereich eines der Sonnenräder (22, 32) insbesondere das zweite Sonnenrad (22), drehfest, vorzugsweise formschlüssig, mit einem korrespondierenden Endbereich einer Eintriebswelle (82) oder eines Planetenträgers verbunden ist.

10. Planetengetriebe (10) nach einem der vorherigen Ansprüche mit einer ersten und einer zweiten Stufe,
**dadurch gekennzeichnet, dass**
das erste Sonnenrad (32) der zweiten Stufe zugeordnet ist,
mit einem Endbereich (34) als Mitnehmer in einen Planetenträger (26) der ersten Stufe eingreift und
eine in axialer Richtung durchgehend gefertigte Verzahnung aufweist.

11. Planetengetriebe (10) nach Anspruch 10,
**dadurch gekennzeichnet, dass**
das erste Sonnenrad (32) einen mittleren Bereich (36) aufweist, wo die durchgehend gefertigte Verzahnung axial unterbrochen ist.

12. Planetengetriebe (10) nach Anspruch 10 oder 11,
**dadurch gekennzeichnet, dass**
der Endbereich (34) in einem Teilbereich (35) verkürzte Zähne und somit einen verkleinerten Kopfkreisdurchmesser aufweist, wodurch ein axialer Anschlag (38) entsteht, an welchem der Planetenträger (26) der ersten Stufe ansteht.

13. Planetengetriebe (10) nach Anspruch 10, 11 oder 12,
**dadurch gekennzeichnet, dass**
die zweite Stufe (30) als Abtriebsstufe ausgebildet ist, wobei ein zweiwangiger Planetenträger (40) der Abtriebsstufe an der Abtriebsseite als Hohlwelle (42), welche vorzugsweise von einer Schrumpfscheibe (44) umschlossen ist, oder als Vollwelle (46), insbesondere als Vierkantvollwelle, ausgebildet ist.

14. Planetengetriebe (10) nach einem der vorherigen Ansprüche,
**dadurch gekennzeichnet, dass**
ein Zwischenflansch (13) an den ein erstes Hohlrad (11) und ein zweites Hohlrad (12) angeflanscht sind, als Gussteil ausgeführt ist.

15. Planetengetriebe (10) nach Anspruch 10, 11, 12 oder 13,
**dadurch gekennzeichnet, dass**
von der Eintriebsseite her gesehen vor der ersten Stufe (20) eine Eintriebsstufe (80) angeordnet ist.

16. Planetengetriebe (10) nach Anspruch 15,
**dadurch gekennzeichnet, dass**
das zweite Sonnenrad (22) in einem eintriebsseitigen Endbereich mit einer Vielkeilverzahnung in einen Eintriebsplanetenträger (90) der Eintriebsstufe (80) eingreift.

17. Planetengetriebe (10) nach einem der Ansprüche 15 und 16,
**dadurch gekennzeichnet, dass**
die Eintriebsstufe (80) und die erste Stufe (20) je drei Planetenräder (27) bzw. Eintriebsplanetenräder (92) aufweisen.

18. Planetengetriebe (10) nach Anspruch 17,
**dadurch gekennzeichnet, dass**
die zweite Stufe (30) vier weitere Planetenräder (41) aufweist.

19. Planetengetriebe (10) nach einem der vorherigen Ansprüche,
**dadurch gekennzeichnet, dass**
ein Eintriebsdeckel einen zentralen zylindermantelförmigen Lagerträger und ein den Lagerträger umschließendes kreisförmiges Schildteil aufweist,
wobei das Schildteil über radial vom Lagerträger abstehende dreieckförmige Teile verstärkt ist und die dreieckförmigen Teile sich auf dem Lagerträger abstützen.

20. Planetengetriebe nach Anspruch 15 ,
**dadurch gekennzeichnet, dass**
ein gleichschenkelig dreieckförmiger Eintriebsplanetenträger (90) mit Planetenbolzen (96) zur Lagerung der Eintriebsplanetenräder (92) der Eintriebsstufe (80) als Gussteil gefertigt ist, wobei die Planetenbolzen (96) in unterschiedlichen radialen Abständen zu einer zentralen Achse des Planetengetriebes (10) aus dem Gussteil herstellbar sind.

21. Planetengetriebe (10) nach einem der Ansprüche 10 und/oder 13,
**dadurch gekennzeichnet, dass**
der Planetenträger (26) bzw. der zweiwangige Planetenträger (40) der ersten und zweiten Stufe (20, 30) aus einem Stück gegossen sind, wobei Aufnahmelöcher für Bolzen (24) bzw. weiteren Bolzen (49) für die Planetenräder (27) bzw. weiteren Planetenrädern (41) in unterschiedlichen radialen Abständen zu einer zentralen Achse des Planetengetriebes (10) herstellbar sind.

22. Planetengetriebe (10) nach einem der vorherigen Ansprüche,
**dadurch gekennzeichnet, dass**
ein Gehäuse des Planetengetriebes (10) einen eintriebseitigen Deckel, ein Eintriebshohlrad, einen Eintriebsflansch (81), ein erstes Hohlrad (11), einen Zwischenflansch (13), ein zweites Hohlrad (12) und einen Abtriebsdeckel umfasst, wobei der Eintriebsflansch (81), der Zwischenflansch (13) und der Abtriebsdeckel aus je einem Gussrohling oder Schmiedeteil gefertigt sind.

## Claims

1. A planetary gear(10), in particular a multi-stage planetary gear, with at least two sun wheels (22, 32) which are arranged coaxially one behind another, with a hydrodynamic axial bearing being formed between the sun wheels (22, 32),
the hydrodynamic axial bearing being formed between two opposing end faces of the sun wheels (22, 32), **characterised in that**
for forming the hydrodynamic axial bearing, a first sun wheel (32) of the sun wheels (22, 32) has a first recess (37) in its end face, which recess is partially extended further radially in the peripheral direction than the end face of a second sun wheel (22) of the sun wheels (22, 32).

2. A planetary gear (10) according to Claim 1, **characterised in that** the first recess (37) lies concentrically to the axis of the first sun wheel (32) and is oval-shaped.

3. A planetary gear (10) according to Claim 1 or 2, **characterised in that** a centrally arranged journal (23) which lies at least partially in a further recess (39) in the end face of the first sun wheel (32) projects beyond the end face of the second sun wheel (22).

4. A planetary gear (10) according to Claim 3, **characterised in that** the further recess (39) lies concentrically to the axis of the first sun wheel (32) and is made circular, the further recess (39) extending axially deeper into the first sun wheel (32) than the first recess (37).

5. A planetary gear (10) according to one of Claims 3 to 4, **characterised in that** a lubricant level of a lubricant with which the planetary gear (10) is filled at least partially touches at least the first recess, or the first recess is located in the lubricant.

6. A planetary gear (10) according to one of the preceding claims, **characterised in that** centring bores and/or tool receptacles are formed in the end faces of the sun wheels (22, 32).

7. A planetary gear (10) according to Claim 3, **characterised in that** a distance between a front surface of the journal (23) and a base surface of the further recess (39) is greater than the distance between the opposing end faces.

8. A planetary gear according to one of the preceding claims, **characterised in that** the sun wheels (22, 32) are mounted to be axially floating.

9. A planetary gear according to one of the preceding claims, **characterised in that** an input-side end region of one of the sun wheels (22, 32), in particular the second sun wheel (22), is connected in rotation-resistant manner, preferably in a positively-locking manner, to a corresponding end region of an input shaft (82) or of a planet carrier.

10. A planetary gear (10) according to one of the preceding claims, with a first and a second stage, **characterised in that** the first sun wheel (32) is associated with the second stage, engages with an end region (34) as driver in a planet carrier (26) of the first stage and has a toothing which is manufactured continuously in the axial direction.

11. A planetary gear (10) according to Claim 10, **characterised in that** the first sun wheel (32) has a middle region (36) where the continuously manufactured toothing is axially interrupted.

12. A planetary gear (10) according to Claim 10 or 11, **characterised in that** the end region (34) in a partial region (35) has shortened teeth and hence a reduced tip diameter, which produces an axial stop (38) on which the planet carrier (26) of the first stage abuts.

13. A planetary gear (10) according to Claim 10, 11 or 12, **characterised in that** the second stage (30) is designed as an output stage, with a two-cheeked planet carrier (40) of the output stage on the output side being formed as a hollow shaft (42), which is preferably surrounded by a shrink disc (44), or as a solid shaft (46), in particular as a solid square shaft.

14. A planetary gear (10) according to one of the preceding claims, **characterised in that** an intermediate flange (13) to which a first ring gear (11) and a second ring gear (12) are flange-connected is embodied as a cast part.

15. A planetary gear (10) according to Claim 10, 11, 12 or 13, **characterised in that** an input stage (80) is arranged, viewed from the input side, before the first stage (20).

16. A planetary gear (10) according to Claim 15, **characterised in that** the second sun wheel (22) in an input-side end region engages with a multiple-spline toothing in an input planet carrier (90) of the input stage (80).

17. A planetary gear (10) according to one of Claims 15 and 16, **characterised in that** the input stage (80) and the first stage (20) have three planet wheels (27) or input planet wheels (92) in each case.

18. A planetary gear (10) according to Claim 17, **characterised in that** the second stage (30) has four further planet wheels (41).

19. A planetary gear (10) according to one of the preceding claims, **characterised in that** an input cover has a central bearing support in the shape of a cylinder jacket and a circular shield part encompassing the bearing support, the shield part being reinforced by triangular parts which protrude radially from the bearing support, and the triangular parts being supported on the bearing support.

20. A planetary gear according to Claim 15, **characterised in that** an isosceles triangular input planet carrier (90) with planet pins (96) for mounting the input planet wheels (92) of the input stage (80) is manufactured as a cast part, the planet pins (96) being able to be produced from the cast part at different radial distances from a central axis of the planetary gear (10).

21. A planetary gear (10) according to one of Claims 10 and/or 13, **characterised in that** the planet carrier (26) or the two-cheeked planet carrier (40) of the first and second stage (20, 30) are cast as one piece, with receiving holes for pins (24) or further pins (49) for the planet wheels (27) or further planet wheels (41) being able to be produced at different radial distances from a central axis of the planetary gear (10).

22. A planetary gear (10) according to one of the preceding claims, **characterised in that** a housing of the planetary gear (10) comprises an input-side cover, an input ring gear, an input flange (81), a first ring gear (11), an intermediate flange (13), a second ring gear (12) and an output cover, the input flange (81), the intermediate flange (13) and the output cover being manufactured from one cast blank or forged part in each case.

## Revendications

1. Boîte de vitesses (10) à trains épicycloïdaux, notamment boîte de vitesses à trains épicycloïdaux à étages multiples,
comprenant au moins deux roues planétaires (22, 32) agencées en succession coaxiale,
un palier axial hydrodynamique étant ménagé entre les roues planétaires (22, 32),
ledit palier axial hydrodynamique étant ménagé entre deux faces extrêmes desdites roues planétaires (22, 32) qui sont situées en vis-à-vis, **caractérisée par le fait que**, pour former le palier axial hydrodynamique,
une première roue planétaire (32) au sein des roues planétaires (22, 32) comporte, dans sa face extrême, un premier évidement (37) présentant, dans la direction périphérique, une étendue radiale en partie supérieure à celle de la face extrême d'une seconde roue planétaire (22) au sein desdites roues planétaires (22, 32).

2. Boîte de vitesses (10) à trains épicycloïdaux, selon la revendication 1, **caractérisée par le fait que**
le premier évidement (37) occupe une position concentrique à l'axe de la première roue planétaire (32), et est de réalisation ovale.

3. Boîte de vitesses (10) à trains épicycloïdaux, selon la revendication 1 ou 2, **caractérisée par le fait que**
la face extrême de la seconde roue planétaire (22) offre un mamelon (23) en saillie, occupant une position centrale et logé, au moins en partie, dans un évidement supplémentaire (39) de la face extrême de la première roue planétaire (32).

4. Boîte de vitesses (10) à trains épicycloïdaux, selon la revendication 3, **caractérisée par le fait que**
l'évidement supplémentaire (39) occupe une position concentrique à l'axe de la première roue planétaire (32), et est de réalisation circulaire,
sachant que la profondeur axiale de pénétration dudit évidement supplémentaire (39), dans ladite première roue planétaire (32), est supérieure à celle du premier évidement (37).

5. Boîte de vitesses (10) à trains épicycloïdaux, selon l'une des revendications 3 à 4,
**caractérisée par le fait**
**qu'**un niveau d'agent lubrifiant, dont ladite boîte de vitesses (10) à trains épicycloïdaux est au moins partiellement emplie, est au moins en contact avec le premier évidement ; ou bien ledit premier évidement baigne dans ledit agent lubrifiant.

6. Boîte de vitesses (10) à trains épicycloïdaux, selon l'une des revendications précédentes,
**caractérisée par le fait que**
des alésages de centrage et/ou des logements d'outils sont pratiqués dans les faces extrêmes des roues planétaires (22, 32).

7. Boîte de vitesses (10) à trains épicycloïdaux, selon la revendication 3, **caractérisée par le fait**
**qu'**une distance, comprise entre une face frontale du mamelon (23) et une surface du fond de l'évidement supplémentaire (39), est plus grande que la distance comprise entre les faces extrêmes situées en vis-à-vis.

8. Boîte de vitesses à trains épicycloïdaux, selon l'une des revendications précédentes,
**caractérisée par le fait que**
les roues planétaires (22, 32) sont montées flottantes dans le sens axial.

9. Boîte de vitesses à trains épicycloïdaux, selon l'une des revendications précédentes,
**caractérisée par le fait**
**qu'**une région extrême située côté entrée de l'une des roues planétaires (22, 32), en particulier la seconde roue planétaire (22), est reliée avec verrouillage rotatif, de préférence par complémentarité de formes, à une région extrême concordante d'un arbre d'entrée (82) ou d'un porte-satellites.

10. Boîte de vitesses (10) à trains épicycloïdaux, selon l'une des revendications précédentes, comprenant des premier et second étages,
**caractérisée par le fait que**
la première roue planétaire (32) est assignée au second étage,
pénètre, par une région extrême (34) constituant un élément d'entraînement, dans un porte-satellites (26) du premier étage, et
est pourvue d'une denture façonnée de manière ininterrompue dans la direction axiale.

11. Boîte de vitesses (10) à trains épicycloïdaux, selon la revendication 10, **caractérisée par le fait que**
la première roue planétaire (32) comporte une région médiane (36) dans laquelle la denture, façonnée de manière ininterrompue, présente une discontinuité axiale.

12. Boîte de vitesses (10) à trains épicycloïdaux, selon la revendication 10 ou 11,
**caractérisée par le fait que**
la région extrême (34) présente des dents raccourcies, et donc un moindre diamètre d'échanfrinement dans une zone partielle (35), donnant ainsi naissance à une butée axiale (38) contre laquelle le porte-satellites (26) du premier étage est en applique.

13. Boîte de vitesses (10) à trains épicycloïdaux, selon la revendication 10, 11 ou 12,
**caractérisée par le fait que**
le second étage (30) est réalisé sous la forme d'un étage de sortie, un porte-satellites (40) à double cage dudit étage de sortie étant réalisé, côté mené, sous la forme d'un arbre creux (42) de préférence ceinturé par une frette discoïdale (44), ou sous la forme d'un arbre massif (46) se présentant, en particulier, comme un arbre massif carré.

14. Boîte de vitesses (10) à trains épicycloïdaux, selon l'une des revendications précédentes,
**caractérisée par le fait**
**qu'**une bride intermédiaire (13), sur laquelle une première roue creuse (11) et une seconde roue creuse (12) sont bridées, est réalisée sous la forme d'une pièce coulée.

15. Boîte de vitesses (10) à trains épicycloïdaux, selon la revendication 10, 11, 12 ou 13,
**caractérisée par le fait**
**qu'**un étage d'entrée (80) est situé avant le premier étage (20) en observant depuis le côté entrée.

16. Boîte dé vitesses (10) à trains épicycloïdaux, selon la revendication 15, **caractérisée par le fait que**
la seconde roue planétaire (22) pénètre dans un porte-satellites d'entrée (90) de l'étage d'entrée (80), dans une région extrême située côté entrée, par une cannelure à nervures multiples.

17. Boîte de vitesses (10) à trains épicycloïdaux, selon l'une des revendications 15 et 16,
**caractérisée par le fait que**
l'étage d'entrée (80) et le premier étage (20) sont munis, respectivement, de trois pignons satellites (27) ou pignons satellites d'entrée (92).

18. Boîte de vitesses (10) à trains épicycloïdaux, selon la revendication 17, **caractérisée par le fait que**
le second étage (30) comporte quatre pignons satellites supplémentaires (41).

19. Boîte de vitesses (10) à trains épicycloïdaux, selon l'une des revendications précédentes,
**caractérisée par le fait**
**qu'**un couvercle d'entrée comprend un support de palier central, en forme d'enveloppe cylindrique, et une pièce d'armure circulaire entourant ledit support de palier,
ladite pièce d'armure étant renforcée par des pièces triangulaires faisant radialement saillie au-delà du support de palier, et lesdites pièces triangulaires prenant appui sur ledit support de palier.

20. Boîte de vitesses à trains épicycloïdaux, selon la revendication 15, **caractérisée par le fait**
**qu'**un porte-satellites d'entrée (90) configuré en triangle équilatéral, doté de tenons (96) porte-satellites dévolus au montage des pignons satellites d'entrée (92) de l'étage d'entrée (80), est réalisé sous la forme d'une pièce coulée, lesdits tenons (96) porte-satellites pouvant être façonnés à partir de ladite pièce coulée, à des distances radiales différentes par rapport à un axe médian de ladite boîte de vitesses (10) à trains épicycloïdaux.

21. Boîte de vitesses (10) à trains épicycloïdaux, selon l'une des revendications 10 et/ou 13,
**caractérisée par le fait que**
le porte-satellites (26), respectivement le porte-satellites (40) à double cage des premier et second étages (20, 30), sont venus de coulée d'une seule pièce, sachant que des trous de réception, respectivement dédiés à des tourillons (24) ou à des tourillons supplémentaires (49) respectivement dévolus aux pignons satellites (27) ou aux pignons satellites supplémentaires (41), peuvent être pratiqués à des distances radiales différentes par rapport à un axe médian de ladite boîte de vitesses (10) à trains épicycloïdaux.

22. Boîte de vitesses (10) à trains épicycloïdaux, selon l'une des revendications précédentes,
**caractérisée par le fait**
**qu'**un carter de ladite boîte de vitesses (10) à trains épicycloïdaux comprend un couvercle situé côté entrée, un pignon creux d'entrée, une bride d'entrée (81), une première roue creuse (11), une bride intermédiaire (13), une seconde roue creuse (12) et un couvercle situé côté sortie, ladite bride d'entrée (81), ladite bride intermédiaire (13) et ledit couvercle situé côté sortie étant respectivement produits à partir d'une ébauche venue de coulée, ou à partir d'une pièce forgée.
